(19) Europäisches Patentamt
European Patent Office
Office européen des brevets

(11) EP 3 136 304 A1

(12) EUROPEAN PATENT APPLICATION

(43) Date of publication:
01.03.2017 Bulletin 2017/09

(51) Int Cl.:
G06N 3/08 (2006.01)        G06N 3/04 (2006.01)

(21) Application number: 16001828.9

(22) Date of filing: 19.08.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 26.08.2015 US 201514836084

(71) Applicant: APPLIED BRAIN RESEARCH INC.
Waterloo, ON N2T 1G9 (CA)

(72) Inventors:
• RASMUSSEN, Daniel Halden
  Princeton, NJ 08540 (US)
• ELIASMITH, Christopher David
  Waterloo, N2T 1G9 (CA)

(74) Representative: Roos, Peter
c/o Roospatent
Griechenstraße 13
81545 München (DE)

(54) **METHODS AND SYSTEMS FOR PERFORMING REINFORCEMENT LEARNING IN HIERARCHICAL AND TEMPORALLY EXTENDED ENVIRONMENTS**

(57)    A system implementing reinforcement learning the system comprising a computer processor and a computer readable medium having computer executable instructions executed by said processor; said computer readable medium including instructions for providing: an action values module that receives environmental state as input, containing at least one adaptive element that learns state and/or action values based on an error signal; an action selection module coupled to the action values module; and an error calculation module coupled to both the action values and action selection module, which computes an error signal used to update state and/or action values in the action values module.

FIG. 1

**Description**

**Field of the Invention**

The system and methods described herein are generally directed to performing reinforcement learning in temporally extended environments in which unknown and arbitrarily long time delays separate action selection, reward delivery, and state transition. The system and methods enable hierarchical processing, wherein abstract actions can be composed out of a policy over other actions. The methods are applicable to distributed systems with nonlinear components, including neural systems.

**Background**

Reinforcement learning is a general approach for determining the best action to take given the current state of the world. Most commonly, the "world" is described formally in the language of Markov Decision Processes (MDPs), where the task has some state space S, available actions A, transition function $P(s, a, s')$ (which describes how the agent will move through the state space given a current state s and selected action $a$), and reward function $R(s, a)$ that describes the feedback the agent will receive after selecting action a in state s. The value of taking action a in state s is defined as the total reward received after selecting a and then continuing on into the future. This can be expressed recursively through the standard Bellman equation as

$$Q(s,a) = R(s,a) + \gamma \sum_{s'} P(s,a,s')Q(s',\pi(s')) \qquad (1)$$

where n($s$) is the agent's policy, indicating the action it will select in the given state. The first term corresponds to the immediate reward received for picking action $a$, and the second term corresponds to the expected future reward (the $Q$ value of the policy's action in the next state, scaled by the probability of reaching that state). $\gamma$ is a discounting factor, which is necessary to prevent the expected values from going to infinity, since the agent will be continuously accumulating more reward.

Temporal difference (TD) learning is a method for learning those $Q$ values in an environment where the transition and reward functions are unknown, and can only be sampled by exploring the environment. It accomplishes this by taking advantage of the fact that a $Q$ value is essentially a prediction, which can be compared against observed data. Note that what is describe here is the state-action-reward-state-action (SARSA) implementation of TD learning. The other main approach is Q-learning, which operates on a similar principle but searches over possible future $Q(s', a')$ values rather than waiting to observe them.

Specifically, the prediction error based on sampling the environment is written

$$\Delta Q(s,a) = \alpha \left[ r + \gamma Q(s',a') - Q(s,a) \right] \qquad (2)$$

where $\alpha$ is a learning rate parameter and $\Delta Q(s, a)$ is the change in the Q value function. The value within the brackets is referred to as the temporal difference and/or prediction error. Note that here the reward and transition functions, $R(s, a)$ and $P(s, a, s')$ have been replaced by the samples $r$ and $s'$. Those allow for an approximation of the value of action $a$, which is compared to the predicted value $Q(s, a)$ in order to compute the update to the prediction. The agent can then determine a policy by selecting the highest valued action in each state (with occasional random exploration, e.g., using $e$-greedy or softmax methods). Under the standard MDP framework, when an agent selects an action the result of that action can be observed in the next time step. Semi-Markov Decision Processes (SMDPs) extend the basic MDP framework by adding time into the Bellman equation, such that actions may take a variable length of time.

The state-action value can then be re-expressed as

$$Q(s,a) = \sum_{t=0}^{\tau-1} \gamma^t r_t + \gamma^\tau Q(s',a') \qquad (3)$$

where the transition to state $s'$ occurs at time $\tau$. That is, the value of selecting action $a$ in state $s$ is equal to the summed reward received across the delay period $\tau$, plus the action value in the resulting state, all discounted across the length of the delay period. This leads to a prediction error equation:

$$\Delta Q(s,a) = \alpha \left[ \sum_{t=0}^{\tau-1} \gamma^t r_t + \gamma^\tau Q(s',a') - Q(s,a) \right] \qquad (4)$$

Hierarchical Reinforcement Learning (HRL) attempts to improve the practical applicability of the basic RL theory outlined above, through the addition of hierarchical processing. The central idea of hierarchical reinforcement learning (HRL) is the notion of an abstract action. Abstract actions, rather than directly affecting the environment like the basic actions of RL, modify the internal state of the agent in order to activate different behavioral subpolicies. For example, in a robotic agent navigating around a house, basic actions might include "turn left", "turn right", and "move forward". An abstract action might be "go to the kitchen". Selecting that action will activate a subpolicy designed to take the agent from wherever it currently is to the kitchen. That subpolicy could itself include abstract actions, such as "go to the doorway".

HRL can be framed as an application of SMDP reinforcement learning. Abstract actions are not completed in a single time step-there is some time interval that elapses while the subpolicy is executing the underlying basic actions, and only at the end of that delay period can the results of that abstract action be observed. The time delays of SMDPs can be used to encapsulate this hierarchical processing, allowing them to be used to capture this style of decision problem.

Previous efforts to implement theories of reinforcement learning in architectures that at least partly employ distributed systems of nonlinear components (including artificial neurons) have had a number of limitations that prevent them from being applied broadly. These include: 1) implementations that do not take into account the value of the subsequent state resulting from an action ($Q(s', a')$), preventing them from solving problems requiring a sequence of unrewarded actions to achieve a goal; 2) implementations that rely on methods that can only preserve RL variables (such as those involved in computing the TD error) over a fixed time window (e.g., eligibility traces), preventing them from solving problems involving variable/unknown time delays; 3) implementations that rely on discrete environments (discrete time or discrete state spaces), preventing them from being applied in continuous domains; 4) implementations wherein the computational cost scales poorly in complex environments, or environments involving long temporal sequences (e.g., where the number of nonlinear components is exponential in the dimensionality of the state space); 5) implementations which are unlikely to be effective with noisy components, given assumptions about certain computations (e.g. exponential discounting, accurate eligibility traces) that are sensitive to noise. A system that is able to overcome one or more of these limitations would greatly improve the scope of application of reinforcement learning methods, including to the SMDP and/or hierarchical cases. Addressing these limitations would allow RL systems to operate in more complex environments, with a wider variety of physical realizations including specialized neuromorphic hardware.

## Summary

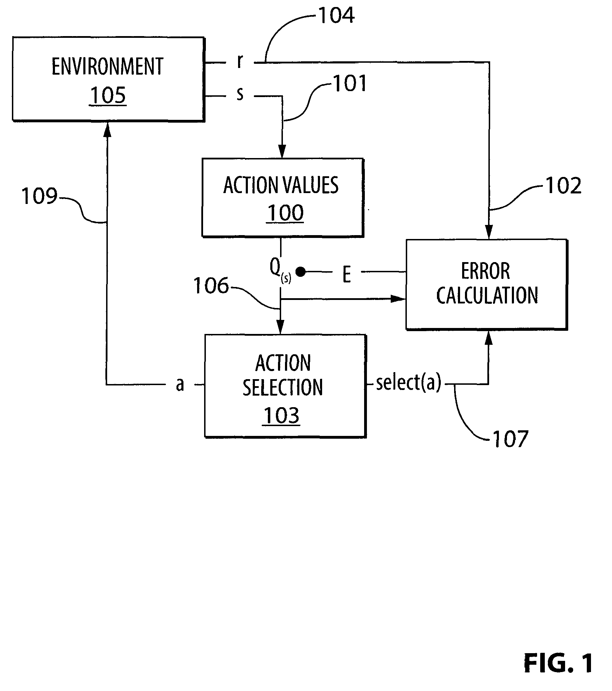

In a first aspect, some embodiments of the invention provide a system for reinforcement learning in systems at least partly composed of distributed nonlinear elements. The basic processing architecture of the system is shown in FIG. 1. The system includes an action values module (100) that receives state representation (101) and projects to the error calculation (102) and action selection (103) modules, an error calculation module (102) that receives reward information (104) from the environment (105) or other part of the system, state values (106) from the action values module and selected actions (107) from the action selection module while projecting an error (108) to the action value to action selection modules, and an action selection module which determines an action to take and projects the result to the environment (109) or other parts of the system. The action values component computes the Q values given the state from the environment and includes at least one adaptive sub-module that learns state/action values based on an error signal. The action selection component determines the next action (often that with the highest value), and sends the action itself to the environment and the identity of the selected action to the error calculation component. The error calculation component uses the $Q$ values and environmental reward to calculate the error, which it uses to update the $Q$ function in the action values component.

The system is designed as a generic reinforcement learning system, and does not depend on the internal structure of the environment. The environment communicates two pieces of information to the system, the state and the reward. These are generally assumed to be real valued vectors, and can be either continuous or discrete in both time and space. "Environment" here is used in a general sense, to refer to all of the state and reward generating processes occurring outside the reinforcement learning system. This may include processes internal to a larger system, such as sensory processing and memory systems. The system communicates with the environment by outputting an action (often another real-valued vector), which the environment uses to generate changes in the state and/or reward.

In this system, each module or sub-module comprises a plurality of nonlinear components, wherein each nonlinear component is configured to generate a scalar or vector output in response to the input and is coupled to the output module by at least one weighted coupling. These nonlinear components may take on a wide variety of forms, including but not limited to static or dynamic rate neurons, spiking neurons, as typically defined in software or hard- ware implementations of artificial neural networks (ANNs). The output from each nonlinear component is weighted by the connection weights of the corresponding weighted couplings and the weighted outputs are provided to other nonlinear components or sub-modules.

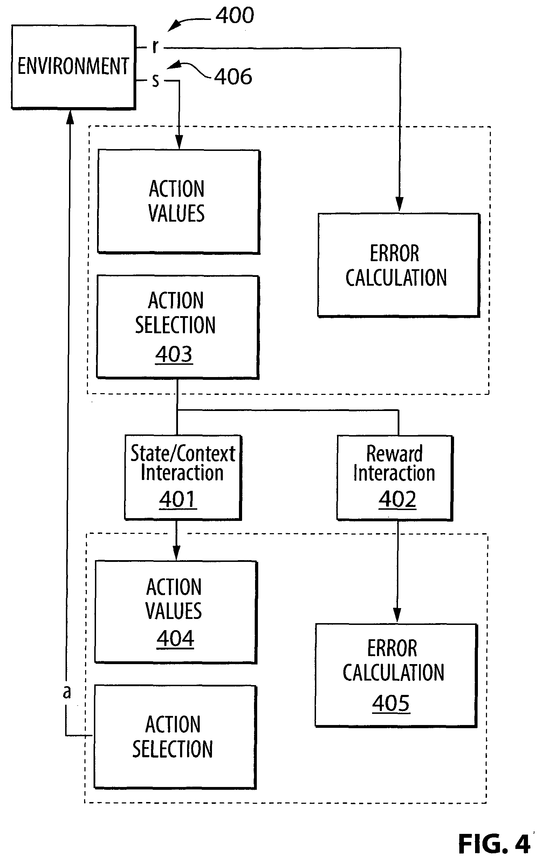

In a second aspect, some embodiments of the system have multiple instances of the system described in the first aspect composed into a hierarchical or recur- rent structure. This embodiment has modules stacked to arbitrary depth (FIG. 4), with their communication mediated by a state/context interaction module (401) and/or a reward interaction module (402). Both of these modules may receive input from the action selection module of the higher system (403) in the hierarchy and project to the action values (404) and error calculation (405) modules of the lower system in the hierarchy, respectively. The state/context module allows modification of state or context representations being projected to the next sub-system. The reward interaction module allows modification of the reward signal going to the lower system from the higher system.

Implementing some embodiments involves determining a plurality of initial couplings such that the adaptive module is coupled to the action value module and the error calculation module, the action selection module is coupled to the error module, with possibly the action selection module of a higher system being coupled to the reward interaction and state/context interaction modules, with those in turn coupling to the action values module and error calculation module of the lower system in the hierarchical case, and each nonlinear component is coupled by at least one weighted coupling. These initial weightings allow each module to compute the desired internal functions of the modules over distributed nonlinear elements. Each weighted coupling has a corresponding connection weight such that the scalar or vector output generated by each nonlinear component is weighted by the corresponding scalar or vector connection weights to generate a weighted output and the weighted outputs from the nonlinear components combine to provide the state action mapping. The action selection module is configured to generate the final output by selecting the most appropriate action using the output from each adaptive sub-module, and each learning module is configured to update the connection weights for each weighted coupling in the corresponding adaptive sub-module based on the error calculation module output.

In some cases, the error module computes an error that may include an integrative discount. It is typical in RL implementations to use exponential discounting. However, in systems with uncertain noise, or that are better able to represent more linear functions, integrative discount can be more effective.

In some cases the module representing state/action values consists of two interconnected sub-modules, each of which receives state information with or without time delay as input, and the output of one sub-module is used to train the other to allow for weight transfer. The weight transfer approach is preferred where eligibility traces do not work, because of noise or because they require limiting the system in an undesirable way. This embodiment is unique in effectively transferring weights.

In some cases, the initial couplings and connection weights are determined using a neural compiler.

In some cases, at least one of the nonlinear components in an adaptive sub module that generates a multidimensional output is coupled to the action selection and/or error calculation modules by a plurality of weighted couplings, one weighted coupling for each dimension of the multidimensional output modifier. In some cases, the learning sub-module of the adaptation sub-module is configured to update connection weights based on the initial output and the outputs generated by the nonlinear components

In some cases, the learning module of the adaptation sub-module is configured to update the connection weights based on an outer product of the initial output and the outputs from the nonlinear components.

In some cases, the nonlinear components are neurons. In some cases, the neurons are spiking neurons.

In some cases, each nonlinear component has a tuning curve that determines the scalar output generated by the nonlinear component in response to any input and the tuning curve for each nonlinear component may be generated randomly.

In some cases, the nonlinear components are simulated neurons. In some cases, the neurons are spiking neurons.

In some cases, the components are implemented in hardware specialized for simulating the nonlinear components.

A third broad aspect includes a method for reinforcement learning as carried out by the system as herein described.

**Brief Descriptions of the Drawings**

FIG. 1: Is a diagram of the overall architecture of the system.

FIG. 2: Is a diagram of the architecture of the action values component.

FIG. 3: Is a diagram of the architecture of the error calculation network.

FIG. 4: Is a diagram of the hierarchical composition of the basic architecture (from FIG. 1).

FIG. 5: Is a diagram of the hierarchical architecture using a recursive structure.

FIG. 6: Is a diagram of the environment used in the delivery task.

FIG. 7: Is the illustration of a plot showing performance of a flat versus hierarchical model on delivery task.

**Descriptions of Exemplary Embodiment**

For simplicity and clarity of illustration, where considered appropriate, reference numerals may be repeated among the figures to indicate corresponding or analogous elements or steps. In addition, numerous specific details are set forth in order to provide a thorough understanding of the exemplary embodiments described herein. However, it will be understood by those of ordinary skill in the art that the embodiments described herein may be practiced without these specific details. In other instances, well-known methods, procedures and components have not been described in detail so as not to obscure the embodiments generally described herein.

Furthermore, this description is not to be considered as limiting the scope of the embodiments described herein in any way, but rather as merely describing the implementation of various embodiments as described.

The embodiments of the systems and methods described herein may be implemented in hardware or software, or a combination of both. These embodiments may be implemented in computer programs executing on programmable computers, each computer including at least one processor, a data storage sys- tem (including volatile memory or non-volatile memory or other data storage elements or a combination thereof), and at least one communication interface. Program code is applied to input data to perform the functions described herein and to generate output information. The output information is applied to one or more output devices, in known fashion.

Each program may be implemented in a high level procedural or object oriented programming or scripting language, or both, to communicate with a computer system. However, alternatively the programs may be implemented in assembly or machine language, if desired. The language may be a compiled or interpreted language. Each such computer program may be stored on a storage media or a device (e.g., ROM, magnetic disk, optical disc), readable by a general or special purpose programmable computer, for configuring and operating the computer when the storage media or device is read by the computer to perform the procedures described herein. Embodiments of the system may also be considered to be implemented as a non-transitory computer-readable storage medium, configured with a computer program, where the storage medium so configured causes a computer to operate in a specific and predefined manner to perform the functions described herein.

Furthermore, the systems and methods of the described embodiments are capable of being distributed in a computer program product including a physical, non-transitory computer readable medium that bears computer usable instructions for one or more processors. The medium may be provided in various forms, including one or more diskettes, compact disks, tapes, chips, magnetic and electronic storage media, and the like. Non-transitory computer-readable media comprise all computer-readable media, with the exception being a transitory, propagating signal. The term non-transitory is not intended to exclude computer readable media such as a volatile memory or RAM, where the data stored thereon is only temporarily stored. The computer usable instructions may also be in various forms, including compiled and non-compiled code.

It should also be noted that the terms coupled or coupling as used herein can have several different meanings depending in the context in which these terms are used. For example, the terms coupled or coupling can have a mechanical, electrical or communicative connotation. For example, as used herein, the terms coupled or coupling can indicate that two elements or devices can be directly connected to one another or connected to one another through one or more intermediate elements or devices via an electrical element, electrical signal or a mechanical element depending on the particular context. Furthermore, the term communicative coupling may be used to indicate that an element or device can electrically, optically, or wirelessly send data to another element or device as well as receive data from another element or device.

It should also be noted that, as used herein, the wording and/or is intended to represent an inclusive-or. That is, X and/or Y is intended to mean X or Y or both, for example. As a further example, X, Y, and/or Z is intended to mean X or Y or Z or any combination thereof.

The described embodiments are methods, systems and apparatus that generally provide for performing reinforcement learning using nonlinear distributed elements. As used herein the term 'neuron' refers to spiking neurons, continuous rate neurons, or arbitrary nonlinear components used to make up a distributed system.

The described systems can be implemented using a combination of adaptive and non-adaptive components. The system can be efficiently implemented on a wide variety of distributed systems that include a large number of nonlinear components whose individual outputs can be combined together to implement certain aspects of the control system as will be described more fully herein below.

Examples of nonlinear components that can be used in various embodiments described herein include simulated/artificial neurons, FPGAs, GPUs, and other parallel computing systems. Components of the system may also be implemented using a variety of standard techniques such as by using microcontrollers. Also note the systems described herein can be implemented in various forms including software simulations, hardware, or any neuronal fabric. Examples of mediums that can be used to implement the system designs described herein include Neurogrid, Spinnaker, OpenCL, and TrueNorth.

Previous approaches to neural implementations of reinforcement learning have often been implemented in ways that prevent them from being applied in SMDP/HRL environments (for example, not taking into account the value of future states, or relying on TD error computation methods that are restricted to fixed MDP timings). Of those approaches that do apply in an SMDP/HRL environment, they are implemented in ways that are not suitable for large-scale distributed systems (e.g., limited to discrete or low dimensional environments, or highly sensitive to noise). The various embodiments described herein provide novel and inventive systems and methods for performing reinforcement learning in large-scale systems of nonlinear (e.g., neural) components. These systems are able to operate in SMDP or HRL environments, operate in continuous time and space, operate with noisy components, and scale up efficiently to complex problem domains.

To implement this system in neurons, it is necessary to be able to represent and transform vector signals. Here we perform these functions using the Neural Engineering Framework (NEF; see Eliasmith and Anderson, 2003, Neural Engineering, MIT Press). For neurons to be able to do this, each neuron is assigned an encoder, **e,** which is a chosen vector defining which signals the related neuron responds most strongly to. Let input current to each neuron be denoted $J$, and calculated as:

$$J = \alpha \, \mathbf{e} \cdot \mathbf{x} + J_{bias} \qquad (5)$$

where $\alpha$ is a gain value, $\mathbf{x}$ is the input signal, and $J_{bias}$ is some background current. The gain and bias values can be determined for each neuron as a function of attributes such as maximum firing rate. The activity of the neuron can then be calculated as:

$$a = G[J] \qquad (6)$$

where $G$ is some nonlinear neuron model, $J$ is the input current defined above, and $a$ is the resultant activity of that neuron.

While Eq. 5 create a mapping from a vector space into neural activity, it is also possible to define a set of decoders, **d,** to do the opposite. Importantly, it is possible to use **d** to calculate the synaptic connection weights that compute operations on the vector signal represented. For non-linear operations, the values of **d** can be computed via Eq. 7.

$$d^{f(x)} = \Gamma^{-1} \Upsilon, \qquad (7)$$

$$\Gamma_i = \int a_i \, a_j \, dx,$$

$$\Upsilon_j = \int a_j \, f(\mathbf{x}) \, dx$$

This minimization of the L-2 norm (squared error) is one of many possible minimizations. Different minimization procedures provide different features (e.g. L-0 tends to be sparser). Any minimization approach resulting in linear decoders can be used. In addition, the minimization can proceed over the temporal response properties of G, instead of, or as well as, the population vector response properties described here. This general approach allows for the conversion be- tween high-level algorithms written in terms of vectors and computations on those vectors and detailed neuron models. The connection weights of the neural network can then be defined for a given pre-synaptic neuron i and post-synaptic neuron j as:

$$\omega_{i,j} = \alpha_j \; e_j \; d_i^{f(x)}. \qquad (8)$$

The learning rule for these neurons can be phrased both in terms of decoders and in the more common form of connection weight updates. The decoder form of the learning rule is:

$$\dot{d}_i = L \; a_i \; err, \qquad (9)$$

where L is the learning rate, and err is the error signal. The equivalent learning rule for adjusting the connection weights is defined:

$$\dot{\omega}_{ij} = L \; \alpha \; e \cdot a_i \; err. \qquad (10)$$

This example learning rule is known as the prescribed error sensitivity (PES) learning rule. This is only one example of a learning rule that can be used in this framework. Extensions to the PES rule (such as the hPES rule) or alternatives (such as Oja's rule) may also be used.

The first aspect of the example embodiment is the representation of state and/or action values-for example, a neural representation of the Q function. This component takes the environmental state s as input, and transforms it via at least one adaptive element into an output *n*-dimensional vector (*n* is often the number of available actions, |*A*|) that represents state and/or action values. We will refer to this vector as *Q*(*s*), i.e.,

$$Q(s) = [Q(s, a1), Q(s, a2). \dots Q(s, an)].$$

The important function of the action values component is to appropriately update the action values based on the computed error signal. This is implemented as a change in the synaptic weights on the output of the neural populations representing the Q functions. The change in synaptic weights based on a given error signal is computed based on a neural learning rule. An example of a possible learning rule is the PES rule, but any error-based synaptic learning rule could be used within this architecture.

Note that this may include learning rules based only on local information. That is, the learning update for a given synapse may only have access to the cur- rent inputs to that synapse (not prior inputs, and not inputs to other neurons). Using only current inputs is problematic for existing neural architectures, because the TD error cannot be computed until the system is in state *s'*, at which point the neural activity based on the previous state *s* is no longer available at the synapse. The system we describe here includes a novel approach to overcome this problem.

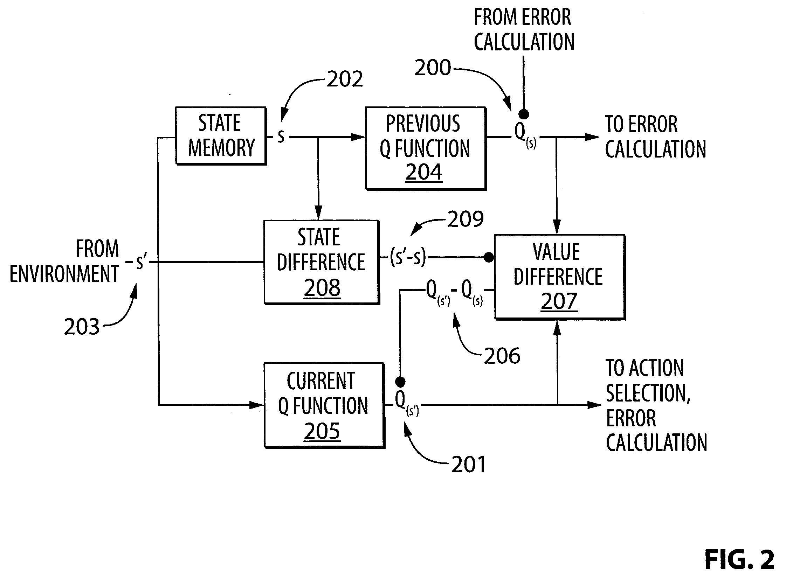

The structure of this component is shown in FIG. 2. Note that this components computes both *Q*(*s*) (200) and *Q*(*s'*) (201). By *s* (202) we mean the value of the environmental state signal when the action was selected, and by *s'* (203) we mean the state value when the action terminates (or the current time, if it has not yet terminated). *Q*(*s*) and *Q*(*s'*) are computed in the previous (204) and current (205) Q function populations, respectively.

The *Q*(*s*) function is learned based on the SMDP TD error signal Equation 4. Importantly, the input to this population is not the state from the environment (*s'*), but the previous state s. This state is saved via a recurrently connected population of neurons, which feeds its own activity back to itself in order to preserve the previous state *s* over time, providing a kind of memory, although other implementations are possible. Thus when the TD error is computed, the output synapses of this population are still receiving the previous state as input, allowing the appropriate weight update to be computed based only on the local synaptic information.

The output of the *Q*(*s*) population can in turn be used to train the *Q*(*s'*) population. Whenever *s* and *s'* are the same (or within some range in the continuous case), the output of the two populations, *Q*(*s*) and *Q*(*s'*), should be the same. Therefore the difference *Q*(*s*) - *Q*(*s'*) (206) calculated in the value difference submodule (207) can be used as the error signal for *Q*(*s'*). One of the inputs to this submodule is from the state distance (208) submodule, which computes the difference between the current and previous states (209). Using the value difference module, the error is

$$E = \begin{cases} Q(s) - Q(s') & \text{if } \|s - s'\| < \theta \\ 0 & \text{otherwise} \end{cases} \qquad (11)$$

where $\vartheta$ is some threshold value. This error signal is then used to update the connection weights, again using an error-based synaptic learning rule.

The values output from the action values component are input to an action selection component that determines which action to perform based on those values. Action selection can be performed in a variety of ways in this embodiment, including winner-take-all circuits employing local inhibition, direct approximation of the max function, or using any of a variety of basal ganglia models for selecting the appropriate action. In this particular embodiment, we employ a basal ganglia model as described in United States Patent Publication No. 2014/0156577 filed December 2, 2013 to Eliasmith et al., the contents of which are herein incorporated by reference in their entirety.

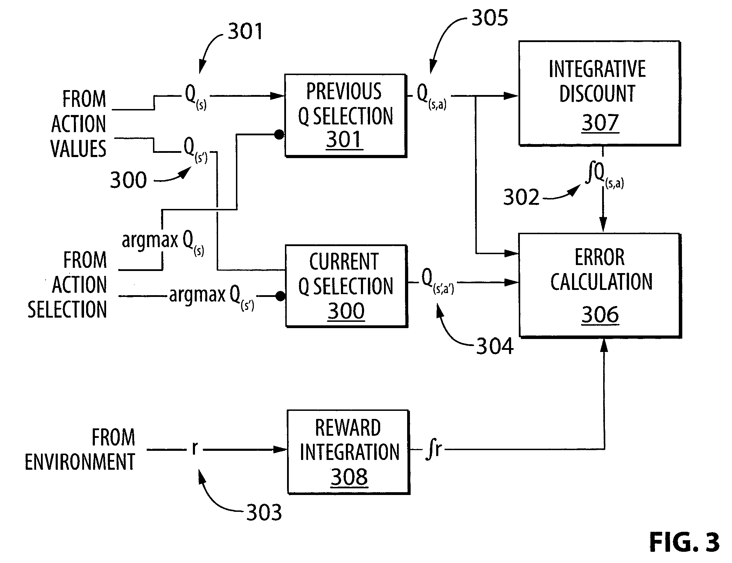

The purpose of the error calculation component (FIG. 3) is to calculate an error signal that can be used by the adaptive element in the action values component to update state and/or action values. Typically this error signal is the SMDP TD prediction error (see Equation 4). There are four basic elements that go into this computation: the values of the current (300) and previously (301) selected action, the discount (302), and the reward (303).

The action values for the previous and current state, Q(s) and Q(s'), are already computed in the action values component, as described previously. Thus they are received here directly as inputs.

The next element of Equation 4 is the discount factor, $\gamma$. Expressed in continuous terms, $\gamma$ is generally an exponentially decaying signal that is multiplied by incoming rewards across the SMDP delay period, as well as scaling the value of the next action $Q(s^t, a^t)$ (304) at the end of the delay period.

One approach to calculating an exponentially decaying signal is via a recurrently connected population of neurons. The connection weights can be set to apply a scale less than one to the output value, using the techniques of the NEF. This will cause the represented value to decay over time, at a rate determined by the scale. This value can then be multiplied by the incoming rewards and current state value in order to implement Equation 4.

Another approach to discounting is to calculate the discount by integrating the value of the previous action (termed an "integrative discount"). We adopt this approach in the example embodiment. The advantage of this approach is that the discount factor can simply be subtracted from the TD error, rather than combined multiplicatively:

$$\delta(s,a) = \sum_{t=0}^{\tau-1} r_t + Q(s',a') - Q(s,a) - \sum_{t=0}^{\tau-1} \gamma Q(s,a) \qquad (12)$$

(note that we express these equations in a discrete form here-in a continuous system, the summations are replaced with continuous integrals). Again this can be computed with a recurrently connected population of neurons (307), and the methods of the NEF can be used to determine those connections.

With $Q(s, a)$ (305), $Q(s', s')$, and the discount computed, the only remaining calculation in Equation 12 is to sum the reward. Again this can be accomplished using a recurrently connected population (308).

With these four terms computed, the TD error can be computed by a single submodule (306) that takes as input the output of the populations representing each value, with a transform of -1 applied to $Q(s, a)$ and the discount. The output of this submodule then represents the TD error function described in Equation 12.

Note that the output of this submodule will be a continuous signal across the delay period, whereas we may only want to update $Q(s, a)$ when the action $a$ terminates. This can be achieved by inhibiting the above submodule, so that the output will be zero except when we want to apply the TD update. The timing of this inhibitory signal is based on the termination of the selected action, so that the learning update is applied whenever an action is completed.

To this point we have described an exemplary embodiment of an SMDP RL system. When extending this basic model to a hierarchical setting, we can think of each SMDP system as the operation of a single layer in the hierarchy. The output of one layer is then used to modify the input to the next layer. The output actions of these layers thus become abstract actions-they can modify the internal functioning of the agent in order to activate different subpolicies, rather than directly interacting with the environment. FIG. 4 shows an example of a two layer hierarchy, but this same approach can be repeated to an arbitrary depth.

The ways in which layers interact (when the abstract action of one layer modifies the function of another layer) can be grouped into three different categories. There are only two inputs to a layer, the reward (402, 406) and the state (400, 401), thus hierarchical interactions must flow over one of those two channels. However, the latter can be divided into two different categories-"context" and "state" interactions.

In a context interaction (401) the higher layer adds some new state information to the input of the lower layer. For example, if the environmental state is the vector s, and the output action of the higher layer is the vector c, the state input to the lower layer can be formed from the concatenation of s and $c$, $s\hat{} = s \oplus c$. In state interactions the higher level modifies the environmental state for the lower level, rather than appending new information. That is, $s\hat{} = f(s, c)$.

The primary use case for this is state abstraction, where aspects of the state irrelevant to the current subtask are ignored. In this case $s\hat{}$ belongs to a lower-dimensional subset of $S$. An example instantiation of $f$ might be

$$f(s,c) = \begin{cases} [s_0, s_1] & \text{if } c > 0 \\ [s_2, s_3] & \text{if } c \leq 0 \end{cases} \qquad (13)$$

Reward interaction (402) involves the higher level modifying the reward input of the lower level. One use case of this is to implement pseudoreward- reward administered for completing a subtask, independent of the environmental reward. That is, $r^\wedge = r(s, a, c)$. An example instantiation of the pseudoreward function might be

$$r(s,a,c) = \begin{cases} 1 & \text{if } \|s - c\| < \theta \\ 0 & \text{otherwise} \end{cases} \qquad (14)$$

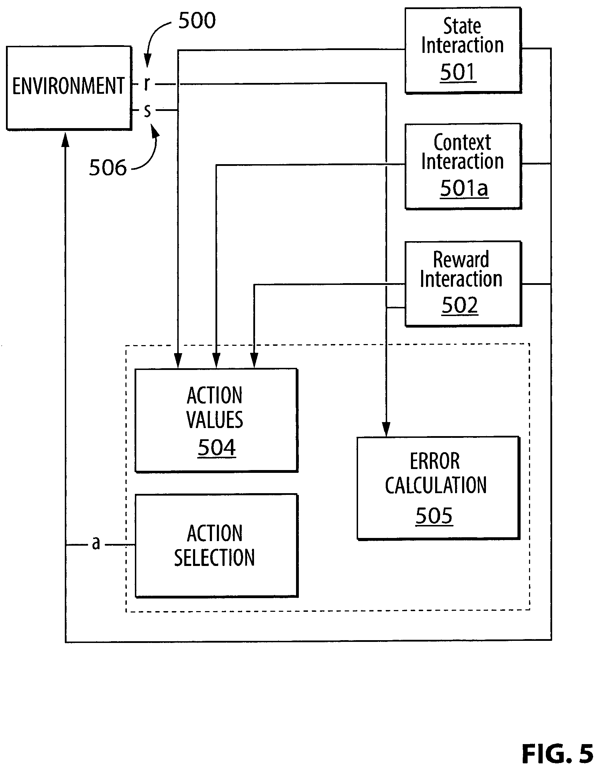

Note that although the hierarchical interactions are described here in terms of multiple physically distinct layers, all of these hierarchical interactions could also be implemented via recurrent connections from the output to the input of a single SMDP layer (FIG. 5; numbers on this diagram are analogous to those in FIG. 4). Or a system could use a mixture of feedforward and recurrently connected layers.

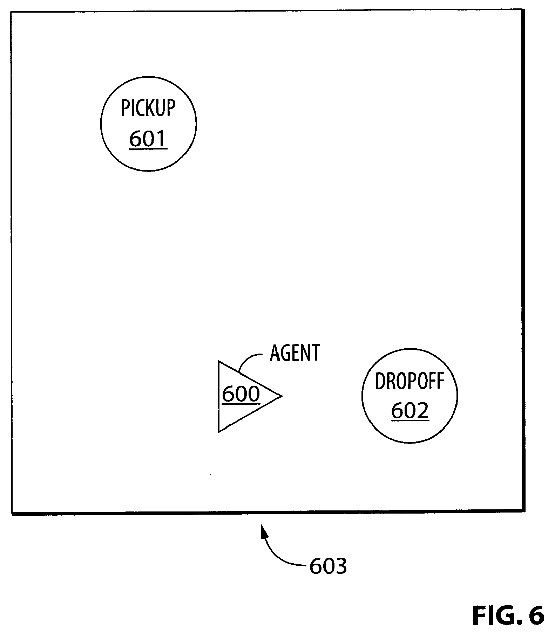

An example task is shown in FIG. 6. The agent (600) must move to the pickup location (601) to retrieve a package, and then navigate to the dropoff location (602) to receive reward. The agent has four actions, corresponding to movement in the four cardinal directions. The environment (603) is represented continuously in both time and space. The environment represents the agent's location using Gaussian radial basis functions. The vector of basis function activations, concatenated with one of two vectors indicating whether the agent has the package in hand or not, forms the state representation. The reward signal has a value of 1.5 when the agent is in the delivery location with the package in hand, and -0.05 otherwise.

The hierarchical model has two layers. The lower layer has four actions, corresponding to the basic environmental actions (movement in the cardinal directions). The higher level has two actions, representing "go to the pick-up location" and "go to the delivery location". The layers interact via a context interaction. The output of the high level (e.g., "go to the pick-up location") is represented by a vector, which is appended to the state input of the lower level. Thus the low level has two contexts, a "pick-up" and "delivery" context. The high level can switch between the different contexts by changing its output action, thereby causing the agent to move to either the pick-up or delivery location via a single high level choice. The low level receives a pseudoreward signal of 1.5 whenever the agent is in the location associated with the high level action (i.e. if the high level is outputting "pick-up" and the agent is in a pick-up state, the pseudoreward value is 1.5). At other times the pseudoreward is equal to a small negative penalty of -0.05.

The learning rule used in the action values component is the PES rule.

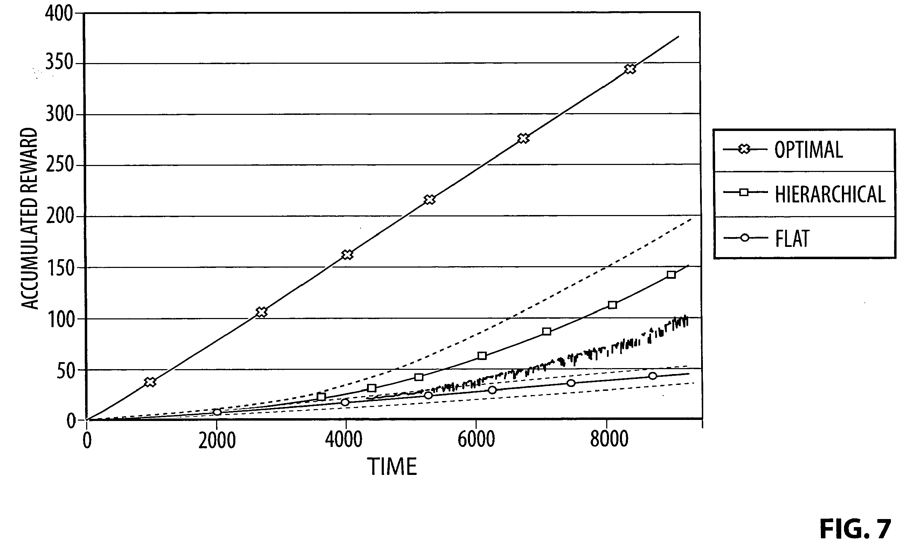

FIG. 7 is a plot comparing the performance of the model with and without hierarchical structure. The figure shows the total accumulated reward over time. Since this is the measure that the model seeks to maximize, the final point of this line indicates the agent's overall performance. Results are adjusted such that random performance corresponds to zero reward accumulation. The optimal line indicates the performance of an agent that always selects the action that takes it closest to the target. It can be seen that the hierarchical model outperforms a model without any hierarchical reinforcement learning ability.

Another example of a potential application is a house navigating robot. This could be implemented with a two layer system, where the lower level controls the robot's actuators (such as directional movement), and the upper level sets navigation goals as its abstract actions. The output of the upper level would act as a context signal for the lower level, allowing it to learn different policies to move to the different goal locations. The upper level would also reward the lower level for reaching the selected goal. Note that this system need not be restricted to two levels; additional layers could be added that set targets at increasing layers of abstraction. For example, a middle layer might contain abstract actions for targets within a room, such as doorways or the refrigerator, while a higher layer could contain targets for different areas of the house, such as the kitchen or the bedroom.

Another example of a potential application is an assembly robot, which puts together basic parts to form a complex object. The low level in this case would contain basic operations, such as drilling a hole or inserting a screw. Middle levels would contain actions that abstract away from the basic elements of the first layer to drive the system towards more complex goals, such as attaching two objects together. Higher levels could contain abstract actions for building complete objects, such as a toaster. A combination of state, context, and re- ward interactions would be used throughout these layers. In addition, some of the middle/upper layers might be recursive in order to allow for hierarchies of unknown depth.

The aforementioned embodiments have been described by way of example only. The invention is not to be considered limiting by these examples and is defined by the claims that now follow.

**Claims**

1. A system implementing reinforcement learning; the system comprising a computer processor and a computer readable medium having computer executable instructions executed by said processor; said computer readable medium including instructions for providing:

  • an action values module that receives environmental state as input, containing at least one adaptive element that learns state and/or action values based on an error signal;
  • an action selection module coupled to the action values module;
  • an error calculation module coupled to both the action values and action selection module, which computes an error signal used to update state and/or action values in the action values module;

  wherein

  • each module or sub-module comprises a plurality of nonlinear components, wherein each nonlinear component is configured to generate a scalar or vector output in response to the input and is coupled to the output module by at least one weighted coupling;
  • the output from each nonlinear component is weighted by the connection weights of the corresponding weighted couplings and the weighted outputs are provided to the output module to form the output modifier;
  • the input to the system is either discrete or continuous in time and space; and,
  • the input to the system is one of a scalar and a multidimensional vector.

2. The system of claim 1, wherein multiple instances of the system are composed into a hierarchical or recurrent structure, wherein the output of one instance performs one or more of

  adding new state input to the input of the downstream instance;
  modifying state in the downstream instance; and
  modifies the reward signal of the downstream instance.

3. The system of claim 1, wherein the module representing state/action values consists of two interconnected sub-modules, each of which receives state information with or without time delay as input, and the output of one sub-module is used to train the other in order to allow state and/or action value updates to be transferred over time.

4. The system of claim 1, wherein there are initial couplings within and between different modules of the system, where each weighted coupling has a corresponding connection weight such that the output generated by each nonlinear component is weighted by the corresponding connection weights to generate a weighted output.

5. The system of claim 1 wherein at least one of the nonlinear components in an adaptive sub module that generates a multidimensional output is coupled to the action selection and/or error calculation modules by a plurality of weighted couplings, one weighted coupling for each dimension of the multidimensional output modifier.

6. The system of claim 1, wherein a learning sub-module is configured to update the connection weights based on an outer product of the initial output and the outputs from the nonlinear components.

7. The system of claim 1, wherein each nonlinear component has a tuning curve that determines the output generated by the nonlinear component in response to any input and the tuning curve for each nonlinear component may be generated randomly.

8. A computer implemented method for reinforcement learning comprising

  • receiving by an action values module stored on a computer readable medium environmental state as input, containing at least one adaptive element that learns state and/or action values based on an error signal;
  • providing on the computer readable medium an action selection module coupled to the action values module;
  • computing an error signal to update state and/or action values in the action values module by a calculation module coupled to both the action values and action selection module

  wherein

• each module or sub-module comprises a plurality of nonlinear components, wherein each nonlinear component is configured to generate a scalar or vector output in response to the input and is coupled to the output module by at least one weighted coupling;
• the output from each nonlinear component is weighted by the connection weights of the corresponding weighted couplings and the weighted outputs are provided to the output module to form the output modifier;
• the input to the system is either discrete or continuous in time and space; and,
• the input to the system is one of a scalar and a multidimensional vector

9.  The method of claim 8, further comprising repeating the method in a hierarchical or recurrent manner such that the output of one instance of the method performs one or more of

   adding new state input to the input of the downstream instance;
   modifying state in the downstream instance; and
   modifies the reward signal of the downstream instance.

10.  The method of claim 8, wherein the module representing state/action values consists of two interconnected sub-modules, each of which receives state information with or without time delay as input, and the output of one sub-module is used to train the other in order to allow state and/or action value updates to be transferred over time.

11.  The method of claim 8, wherein there are initial couplings within and between different modules, where each weighted coupling has a corresponding connection weight such that the output generated by each nonlinear component is weighted by the corresponding connection weights to generate a weighted output.

12.  The method of claim 8, further comprising determining by a neural complier the initial couplings and connection weights.

13.  The method of claim 8 wherein at least one of the nonlinear components in an adaptive submodule that generates a multidimensional output is coupled to the action selection and/or error calculation modules by a plurality of weighted couplings, one weighted coupling for each dimension of the multidimensional output modifier.

14.  The method of claim 8, further comprising updating by a learning sub-module connection weights based on the initial output and the outputs generated by the nonlinear components

15.  The method of claim 8, wherein each nonlinear component has a tuning curve that determines the output generated by the nonlinear component in response to any input and the tuning curve for each nonlinear component may be generated randomly.

FIG. 1

FIG. 2

EP 3 136 304 A1

FIG. 3

400

406

ENVIRONMENT

r

s

ACTION
VALUES

ACTION
SELECTION
403

ERROR
CALCULATION

State/Context
Interaction
401

Reward
Interaction
402

ACTION
VALUES
404

ERROR
CALCULATION
405

a

ACTION
SELECTION

**FIG. 4**

500

ENVIRONMENT

r

s

506

State
Interaction
501

Context
Interaction
501a

Reward
Interaction
502

ACTION
VALUES
504

ERROR
CALCULATION
505

a

ACTION
SELECTION

**FIG. 5**

PICKUP
601

AGENT

600

DROPOFF
602

603

**FIG. 6**

**FIG. 7**

Europäisches
Patentamt

European
Patent Office

Office européen
des brevets

**EUROPEAN SEARCH REPORT**

Application Number

EP 16 00 1828

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Daniel Rasmussen: "Hierarchical reinforcement learning in a biologically plausible neural architecture", , 18 November 2014 (2014-11-18), XP055330199, Retrieved from the Internet: URL:https://uwspace.uwaterloo.ca/bitstream/handle/10012/8943/Rasmussen_Daniel.pdf?sequence=3&isAllowed=y [retrieved on 2016-12-19] | 1-6,8-14 | INV. G06N3/08 G06N3/04 |
| Y | * Chapter 2 - Section 2.3; Chapter 4 - introduction and sections 4.1 - 4.4; Chapter 5 - section 5.3 * | 7,15 | |
| X | DANIEL RASMUSSEN ET AL: "A neural model of hierarchical reinforcement learning", COGSCI 2014 - THE ANNUAL MEETING FOR THE COGNITIVE SCIENCE SOCIETY, 26 July 2014 (2014-07-26), pages 1252-1257, XP055330219, ISBN: 978-0-9911967-0-8 | 1,2,4-6, 8-14 | |
| A | * page 1252 - page 1256 * | 7,15 | TECHNICAL FIELDS SEARCHED (IPC) G06N |
| Y | TREVOR BEKOLAY ET AL: "Nengo: a Python tool for building large-scale functional brain models", FRONTIERS IN NEUROINFORMATICS, vol. 7 Article 48, 6 January 2014 (2014-01-06), pages 1-13, XP055331540, DOI: 10.3389/fninf.2013.00048 | 7,15 | |
| A | * Section 2. Neural Engineering Framework (NEF) * | 1-6,8-14 | |
| A | WO 2015/054264 A1 (GOOGLE INC [US]) 16 April 2015 (2015-04-16) * the whole document * | 1-15 | |

-/--

The present search report has been drawn up for all claims

| Place of search | Date of completion of the search | Examiner |
|---|---|---|
| The Hague | 10 January 2017 | Klasen, TJ |

EPO FORM 1503 03.82 (P04C01)

## EUROPEAN SEARCH REPORT

Europäisches
Patentamt
European
Patent Office
Office européen
des brevets

Application Number

EP 16 00 1828

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 392 346 B2 (UEDA YUGO [JP] ET AL) 5 March 2013 (2013-03-05) * the whole document * ----- | 1-15 | |

TECHNICAL FIELDS
SEARCHED       (IPC)

The present search report has been drawn up for all claims

| Place of search | Date of completion of the search | Examiner |
|---|---|---|
| The Hague | 10 January 2017 | Klasen, TJ |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 00 1828

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2017

| Patent document cited in search report | | Publication date | Patent family member(s) | | Publication date |
|---|---|---|---|---|---|
| WO 2015054264 | A1 | 16-04-2015 | CN | 105637540 A | 01-06-2016 |
| | | | EP | 3055813 A1 | 17-08-2016 |
| | | | US | 2015100530 A1 | 09-04-2015 |
| | | | WO | 2015054264 A1 | 16-04-2015 |
| US 8392346 | B2 | 05-03-2013 | JP | 5330138 B2 | 30-10-2013 |
| | | | JP | 2010134907 A | 17-06-2010 |
| | | | US | 2010114807 A1 | 06-05-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140156577 A, Eliasmith

**Non-patent literature cited in the description**

- **ELIASMITH ; ANDERSON.** Neural Engineering. MIT Press, 2003